# FASCICULE DE BREVET EUROPEEN

(11) **EP 1 002 459 B1**
(45) Date de publication et mention de la délivrance du brevet: **04.06.2003**
(21) Numéro de dépôt: 99121089.9
(22) Date de dépôt: 12.09.1996
(51) Int. Cl.: A01D 78/10

(54) **Machine de fenaison**
Heuwerbungsmaschine
Haymaking machine

(30) Priorité: 15.09.1995 FR 9511003
(43) Date de publication de la demande: 24.05.2000
(62) Demande divisionnaire de: 96440070.9
(73) Titulaire: KUHN S.A., 67706 Saverne Cedex (FR)
(72) Inventeur: Aron, Jérôme, 67330 Dossenheim-Sur-Zinsel (FR); Helfer, Marc, 67700 Ottersthal (FR)
(74) Mandataire: Andres, Jean-Claude

(56) Documents cités:
- DE-A- 4 021 812
- DE-U- 9 002 629

## Description

La présente invention se rapporte à une machine de fenaison, notamment une andaineuse de végétaux fauchés, comportant un bâti portant deux rotors d'andainage qui sont entraînés en rotation durant le travail autour d'axes sensiblement verticaux munis de roues porteuses, lequel bâti possède une poutre de traction pouvant être reliée à un tracteur et portant le premier rotor et une poutre de liaison portant le deuxième rotor, cette poutre de liaison étant articulée par rapport à la poutre de traction et au premier rotor de manière à pouvoir être déplacée avec le deuxième rotor dans plusieurs positions.

Sur une machine de ce genre, connue dans le brevet FR 2 649 286, le premier rotor est lié à un bras de traction. Le second rotor est articulé à l'extrémité arrière d'une poutre de liaison au moyen d'une articulation sphérique. L'extrémité avant de cette poutre est articulée sur le bras de traction au moyen d'une deuxième articulation sphérique située devant l'axe de rotation du premier rotor. Sur cette machine la transposition de la poutre de liaison et du second rotor dans les différentes positions de travail et de transport s'obtient en modifiant, au moyen d'un vérin hydraulique, l'orientation dudit second rotor autour de son articulation sphérique avec la poutre de liaison. Dès que la machine est déplacée en avant, les roues porteuses du second rotor se replacent automatiquement dans la direction d'avancement. Elles font alors pivoter la poutre de liaison vers la droite ou vers la gauche autour de son articulation sur la poutre de traction. Pour le travail, le second rotor est alors décalé latéralement vers la droite ou vers la gauche par rapport au premier rotor. En conséquence, les deux rotors forment soit un andain unique, soit deux andains séparés à chaque passage.

Toutefois, sur les terrains en pente ou lorsque le fourrage est volumineux et lourd, les roues porteuses du second rotor peuvent glisser sur le sol. Ce rotor se déplace alors vers l'arrière du premier rotor et n'assure plus correctement son travail.

La présente invention a pour but de proposer une machine telle que décrite dans l'introduction et n'ayant pas les inconvénients précités.

A cet effet, une importante caractéristique de l'invention consiste en ce que un dispositif de maintien est disposé entre la poutre de traction et la poutre de liaison. Ce dispositif favorise le placement du second rotor dans une position décalée latéralement par rapport au premier rotor durant le travail. Cela est particulièrement avantageux lorsque l'adhérence au sol des roulettes porteuses du second rotor est trop faible pour le maintenir en place. Le dispositif de maintien exerce avantageusement une traction sur la poutre de liaison qui aide à la maintenir dans la bonne position de travail.

D'autres caractéristiques et avantages de l'invention ressortiront de la description qui va suivre et qui se réfère aux dessins annexés qui représentent, à titre d'exemple non limitatif, une forme de réalisation de la machine selon l'invention.

Sur ces dessins :
- la figure 1 représente une vue de dessus d'une machine selon l'invention en position de travail ;
- la figure 2 représente une vue de dessus de la machine selon l'invention en position de transport ;
- la figure 3 représente, à plus grande échelle, une vue de côté de la partie avant de la machine ;
- la figure 4 représente une coupe du premier rotor suivant un plan sensiblement vertical ;
- la figure 5 représente une coupe du deuxième rotor suivant un plan sensiblement vertical ;
- la figure 6 représente schématiquement un exemple de réalisation de moyens pour déplacer le deuxième rotor.

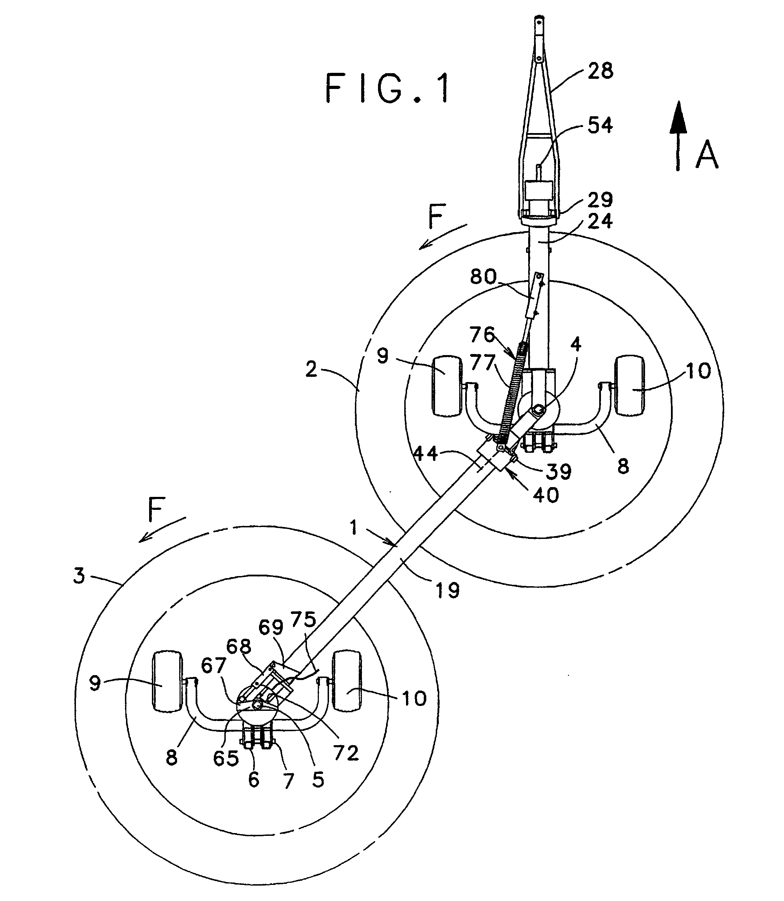

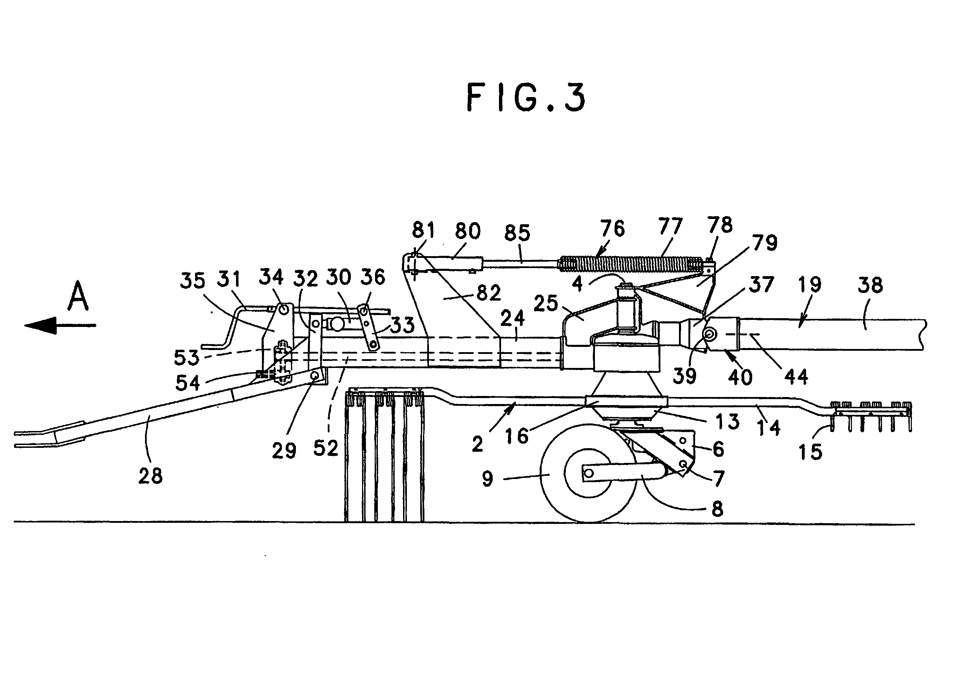

Telle qu'elle est représentée sur les figures 1 à 3, la machine selon l'invention comporte un bâti (1) qui porte deux rotors (2 et 3) d'andainage. Ces rotors (2 et 3) sont montés rotatifs sur des axes (4 et 5) sensiblement verticaux. Chacun de ces axes (4 et 5) porte à son extrémité inférieure un support (6) sur lequel est articulé en (7) un cintre (8) muni de deux roues porteuses (9 et 10). Entre chaque support (6) et des pattes (11) solidaires du cintre (8) correspondant est disposé un vérin hydraulique (12). Celui-ci permet de déplacer le cintre (8) autour de son articulation (7) avec le support (6) correspondant en vue de modifier la distance du rotor (2, 3) correspondant par rapport au sol.

Chaque rotor (2, 3) se compose essentiellement d'un carter central (13) qui est monté sur l'axe (4, 5) correspondant au moyen de roulements à billes. Ce carter central (13) porte plusieurs bras (14) qui s'étendent dans un plan pratiquement horizontal. Ceux-ci sont munis à leurs extrémités les plus éloignées dudit carter (13) de fourches de râtelage (15). Ces bras (14) sont montés dans des paliers (16) dudit carter (13) de manière à pouvoir pivoter sur eux-mêmes, autour de leurs axes géométriques longitudinaux. Dans chaque carter central (13) se situe une came de commande (17) qui est fixée sur l'axe (4, 5) correspondant. Chaque bras porte-fourches (14) possède à son extrémité située à l'intérieur du carter (13) un galet (18) qui coopère avec ladite came de commande (17).

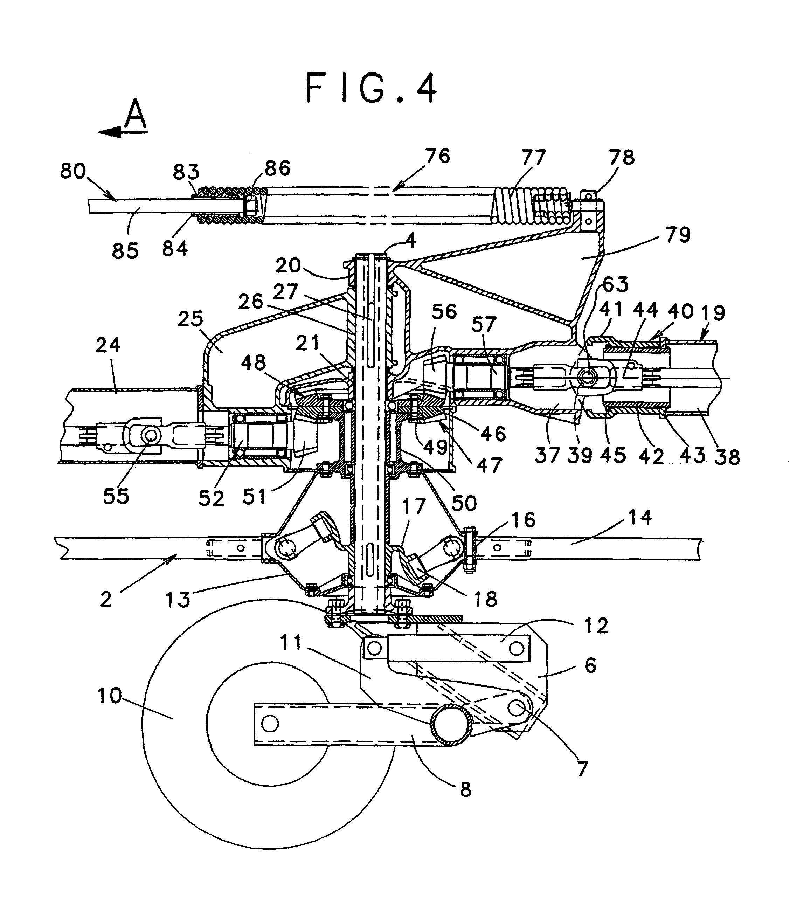

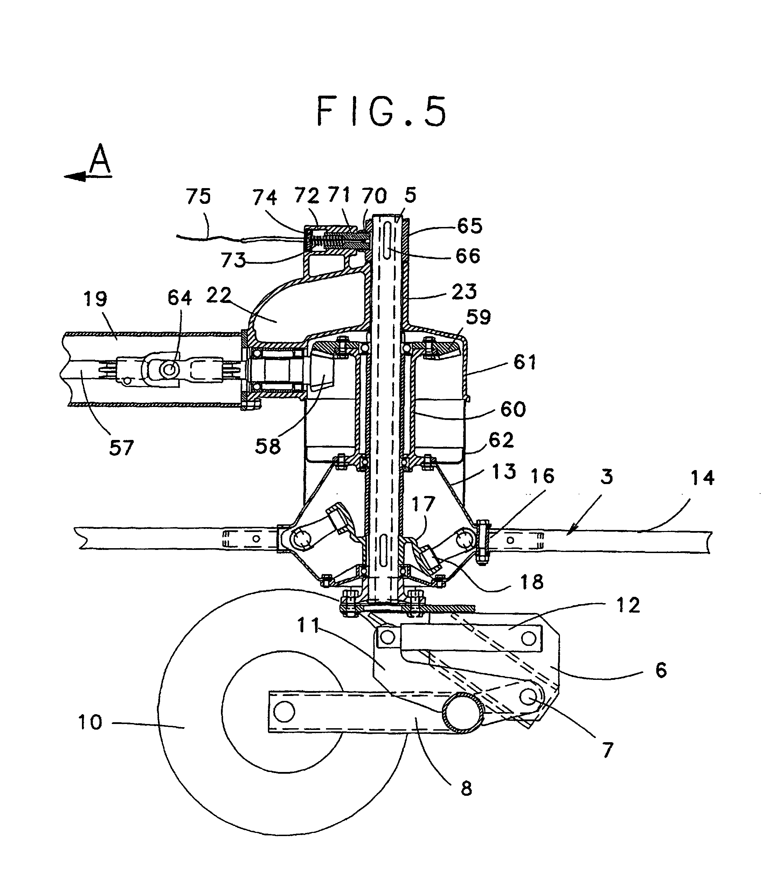

Une poutre de liaison (19) relie l'axe sensiblement vertical (4) du premier rotor (2) à celui (5) du deuxième rotor (3). L'extrémité avant de cette poutre (19) est articulée sur l'axe (4) du premier rotor (2) (voir figure 4). A cet effet, elle comporte deux paliers (20 et 21) avec des bagues lisses dans lesquelles passe l'axe (4). Grâce à celles-ci, la poutre (19) peut pivoter autour dudit axe (4), ce qui permet notamment de modifier la position du deuxième rotor (3) par rapport au premier rotor (2). L'extrémité arrière de la poutre (19) présente un coude (22) qui est articulé sur l'axe (5) du deuxième rotor (3). A cet effet, ce coude (22) comporte un palier (23) avec une bague lisse dans laquelle passe ledit axe (5). Celui-ci peut alors tourner sur lui-même par rapport à la poutre de liaison (19) (voir figure 5).

Une poutre de traction (24) est également fixée sur l'axe (4) sensiblement vertical du premier rotor (2). Elle comporte un coude (25) avec un palier (26) qui se situe entre les deux paliers (20 et 21) de la poutre de liaison (19). Elle est immobilisée en rotation sur cet axe (4) à l'aide d'une clavette (27). Cette poutre de traction (24) s'étend horizontalement vers l'avant (vu dans la direction d'avancement (A)). A son extrémité avant est articulé un timon (28) au moyen d'un axe (29). Celui-ci permet d'accrocher la machine à un tracteur. La position de ce timon (28) par rapport à la poutre (24) est réglable au moyen d'un vérin hydraulique (30) et d'une manivelle (31). Ce vérin hydraulique (30) est lié à un arceau (32) solidaire du timon (28) et à un levier (33) qui est articulé sur la poutre de traction (24). La manivelle (31) est, d'une part, guidée de telle sorte qu'elle soit libre en rotation et immobile en translation dans un axe (34) qui est articulé sur une chape (35) de la poutre de traction (24) et, d'autre part, vissée dans un trou fileté d'un second axe (36) qui est articulé sur le levier (33).

Le vérin hydraulique (30) permet de modifier d'une manière importante la position relative entre le timon (28) et la poutre de traction (24) lors des changements de position de la machine, alors que la manivelle (31) permet d'effectuer des réglages plus précis. Ledit vérin hydraulique (30) peut avantageusement être raccordé aux tuyaux hydrauliques qui alimentent les vérins hydrauliques (12) qui sont situés sous les rotors ( 2 et 3) de sorte qu'ils agissent ensemble pour soulever ou abaisser la machine.

La poutre de liaison (19) se compose de deux parties (37 et 38) qui sont articulées entre elles par un axe (39) qui est transversal par rapport à la direction d'avancement (A) et sensiblement horizontal. Cet axe (39) se situe à proximité de l'axe (4) sensiblement vertical du premier rotor (2). De ce fait, la partie (38) qui est liée au deuxième rotor (3) est relativement longue, ce qui permet à ce dernier de se déplacer en hauteur d'une manière importante pour suivre les dénivellations du sol.

Il ressort clairement de la figure 4 que la poutre de liaison (19) peut comporter une deuxième articulation (40) dirigée dans la direction longitudinale. A cet effet, l'extrémité avant de sa partie (38) est constituée par un manchon (41) qui porte l'axe d'articulation transversal (39). Dans ce manchon (41) est logé un tube (42) relativement court qui est soudé sur une couronne (43) qui est elle-même soudée sur la partie (38) de la poutre (19). Ledit tube (42) est guidé dans le manchon (41) au moyen de bagues lisses de sorte qu'il puisse tourner sur lui-même autour de son axe géométrique longitudinal (44). Il est immobilisé dans le sens axial, d'une part, par la couronne (43) et, d'autre part, par une bague d'arrêt (45). Cet agencement permet à la partie (38) de la poutre (19) et au deuxième rotor (3) de pivoter autour de l'axe géométrique longitudinal (44) pour mieux suivre les dénivellations du sol.

L'entraînement en rotation des deux rotors (2 et 3) est assuré mécaniquement à partir de l'arbre de prise de force du tracteur. A cet effet, le premier rotor (2) comporte une première couronne dentée (46) avec deux dentures coniques (47 et 48). Elle est réalisée en deux parties assemblées entre elles à l'aide de boulons (49). Cette première couronne (46) est fixée avec ces mêmes boulons (49) sur un flanc supérieur d'une entretoise (50) qui est par ailleurs fixée au carter central (13) du rotor (2). L'une (47) de ces dentures est dirigée vers le bas et engrène avec un premier pignon (51). Celui-ci est solidaire d'un arbre d'entraînement (52) qui s'étend dans le bras de traction (24) en direction du tracteur. Son extrémité avant se situe dans un carter de réduction (53) disposé à l'extrémité avant de la poutre de traction (24). Dans ce carter (53) ladite extrémité porte une roue dentée qui engrène avec une seconde roue dentée de plus petit diamètre. Celle-ci est montée sur un arbre (54) qui sort du carter (53) et qui peut être relié à l'arbre de prise de force du tracteur à l'aide d'un arbre à cardans intermédiaire qui n'est pas représenté.

Ledit arbre d'entraînement (52) est réalisé en deux parties reliées entre elles au moyen d'un joint universel (55) tel qu'un joint de cardan ou une articulation à doigts qui engrènent entre eux. Ce joint permet de remédier à un éventuel défaut d'alignement entre le premier pignon (51) et la roue dentée du carter de réduction (53) qui se situent tous les deux sur l'arbre d'entraînement (52).

La deuxième denture (48) est dirigée vers le haut et engrène avec un second pignon (56) qui se situe au-dessus d'elle. Ce second pignon (56) est solidaire d'un arbre de transmission (57) qui s'étend jusqu'au deuxième rotor (3) (voir figure 5). L'extrémité arrière de cet arbre (57) porte un troisième pignon (58) qui engrène avec une deuxième couronne dentée (59) qui se situe au-dessus dudit troisième pignon (58). De ce fait, les deux rotors (2 et 3) sont entraînés en rotation dans le même sens. La deuxième couronne (59) est reliée au carter central (13) du deuxième rotor (3) au moyen d'une entretoise (60). Elle est entourée par un boîtier de protection (61) qui est solidaire de la poutre de liaison (19). L'entretoise (60) porte une collerette (62) qui s'étend du carter central (13) jusqu'au boîtier (61) et empêche l'arrivée de corps étrangers dans ce dernier.

L'arbre de transmission (57) est logé dans la poutre de liaison (19). Il pivote avec cette poutre autour de l'axe (4) sensiblement vertical du premier rotor (2). Le second pignon (56) se déplace alors sur la première couronne (46). De ce fait, l'angle de pivotement de la poutre de liaison (19) peut être très important sans qu'il y ait un risque de rupture des moyens de transmission du mouvement d'entraînement.

Il ressort de la figure 4 que l'arbre de transmission (57) comporte un joint universel (63) tel qu'un joint de cardan ou une articulation à doigts qui engrènent, au niveau de l'axe d'articulation transversal (39) de la poutre de liaison (19). Ledit arbre (57) peut ainsi se déplacer avec la partie arrière (38) de la poutre de liaison (19) et avec le second rotor (3) lorsque celui-ci passe sur des dénivellations du sol. L'arbre de transmission (57) comporte avantageusement un second joint universel (64) du type joint de cardan ou articulation à doigts (voir figure 5). Celui-ci se situe à proximité du troisième pignon (58). Il permet de remédier à un éventuel défaut d'alignement entre le troisième pignon conique (58) qui est disposé sur l'extrémité arrière de l'arbre de transmission (57) et son extrémité relativement éloignée qui est liée au premier joint universel (63).

L'extrémité supérieure de l'axe (5) sensiblement vertical du second rotor (3) porte un manchon (65). Celui-ci se situe au-dessus du palier (23) de la poutre de liaison (19) et est fixé sur l'axe (5) au moyen d'une clavette (66). Le manchon (65) possède un bras latéral (67) avec une chape qui sert à l'accrochage d'une tige d'un vérin hydraulique (68). Le corps de ce vérin (68) est articulé sur une chape (69) qui est solidaire de la poutre de liaison (19). Ledit vérin hydraulique (68) peut être commandé depuis le tracteur. Il permet de déplacer le manchon (65) de telle sorte qu'il fasse tourner l'axe (5) sensiblement vertical sur lui-même.

Ledit manchon (65) comporte en sus un logement de blocage (70) dans lequel peut s'engager un verrou (71) dans la position de transport. Ce verrou (71) est logé dans un fourreau (72) qui est solidaire du coude (22) de la poutre de liaison (19). Il peut se déplacer longitudinalement dans ce fourreau (72) de manière à ce que son extrémité puisse être retirée du logement de blocage (70) en vue de libérer le manchon (65) et l'axe (5) sensiblement vertical. Un ressort de pression (73) qui pousse le verrou (71) en direction du logement de blocage (70) est également placé dans le fourreau (72). D'un côté il s'appuie contre le verrou (71) et de l'autre côté contre une paroi d'obturation (74) du fourreau (72). Un câble de commande (75) qui s'étend jusqu'au siège du tracteur est attaché audit verrou (71). Ce câble (75) permet de tirer le verrou (71) à l'encontre de la force du ressort (73) en vue du déblocage du manchon (65) et de l'axe (5) sensiblement vertical du second rotor (3).

Un dispositif de maintien (76) est disposé entre la poutre de traction (24) et la poutre de liaison (19) en vue de favoriser le placement du second rotor (3) dans une position décalée latéralement par rapport au premier rotor (2) durant le travail.

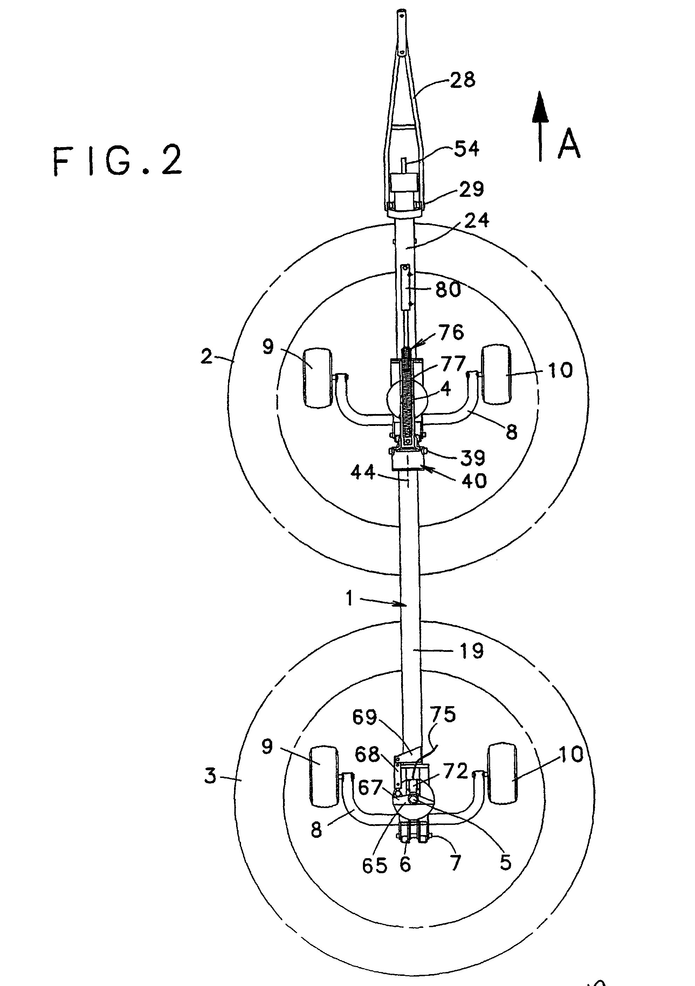

Dans l'exemple représenté un organe de traction tel qu'un ressort (77) est accroché par l'une de ses extrémités à un axe (78) d'une patte (79) qui est solidaire de la partie (37) de la poutre de liaison (19). L'autre extrémité de ce ressort (77) coopère avec un vérin hydraulique (80) qui peut être commandé depuis le tracteur et qui est articulé au moyen d'un axe (81) sur un bras (82) de la poutre de traction (24). Ledit ressort (77) passe au-dessus de l'axe (4) sensiblement vertical du premier rotor (2). L'axe d'articulation (81) du vérin hydraulique (80) et l'axe d'articulation (78) du ressort (77) sont placés dans des plans verticaux dirigés dans la direction d'avancement (A) et passant chacun par le milieu de la poutre (19 et 24) correspondante, lorsque la machine est en position de transport (figure 2). L'extrémité du ressort (77) qui coopère avec le vérin hydraulique (80), comporte une bague (83) avec un alésage (84) dont le diamètre est légèrement supérieur au diamètre de la tige (85) du vérin hydraulique (80). Cette tige (85) s'étend à travers cet alésage (84) avec un léger jeu et comporte à son extrémité située au-delà de la bague (83), à l'intérieur du ressort (77), un arrêt (86) dont les dimensions extérieures sont supérieures au diamètre de l'alésage (84). De cette manière il est possible de tendre le ressort (77) avec le vérin (80) en faisant rentrer sa tige (85). Cette opération peut avantageusement être combinée avec celle consistant à modifier l'orientation de l'axe (5) sensiblement vertical et des roues (9 et 10) du second rotor (3). Pour cela ce vérin hydraulique (80) est couplé aux tuyaux hydrauliques qui vont au vérin hydraulique (68) qui commande ledit axe (5). Ainsi, lorsque ce dernier vérin hydraulique (68) s'allonge pour orienter l'axe (5) et les roues (9 et 10) vers le côté, en vue de la mise en position de travail, l'autre vérin hydraulique (80) se raccourcit et tend le ressort (77) afin qu'il tire sur la poutre de liaison (19). A l'inverse, lorsque le vérin hydraulique (68) se raccourcit pour orienter l'axe (5) et les roues (9 et 10) dans la direction opposée, en vue de la mise en position de transport, le vérin hydraulique (80) s'allonge et détend le ressort (77).

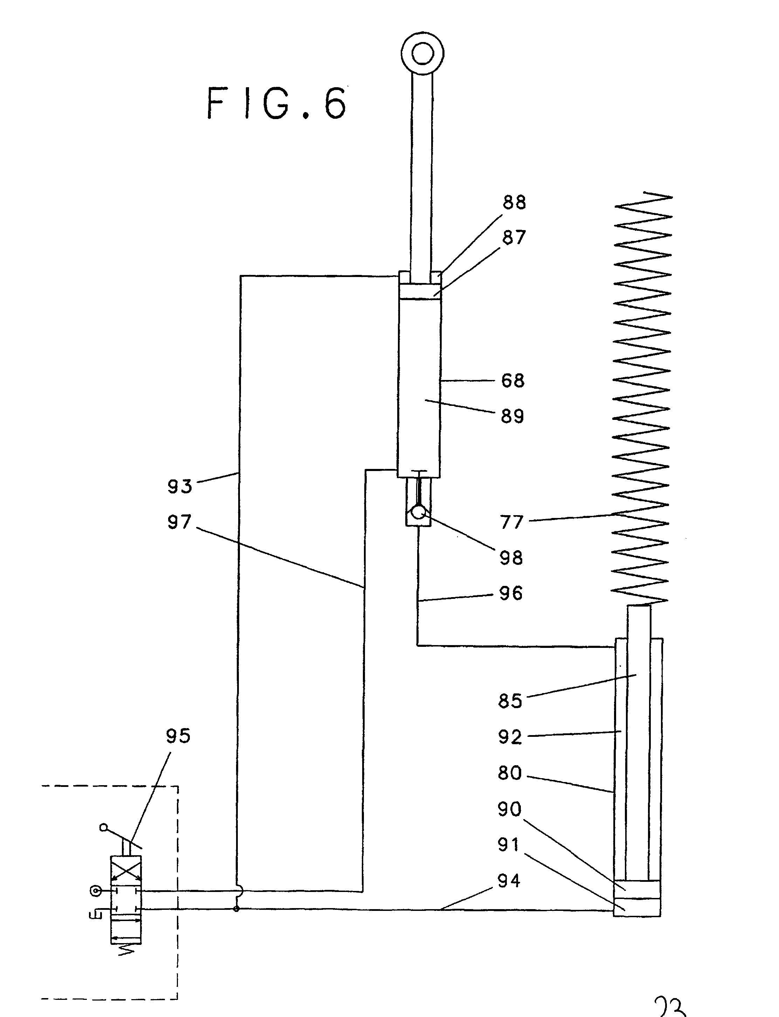

Dans la description ci-après de l'exemple de réalisation représenté sur la figure 6 les pièces communes avec l'exemple précité ne sont plus décrites en détail et conservent leurs repères. Selon cet exemple, le vérin hydraulique (68) possède un piston (87) qui sépare son volume intérieur en deux chambres (88 et 89). Le vérin hydraulique (80) comporte un piston (90) dont la tige (85) est liée au ressort (77). Ce piston (90) sépare également le volume intérieur du vérin hydraulique (80) en deux chambres (91 et 92). Les premières chambres (88 et 91) de ces deux vérins (68 et 80) sont reliées par des tuyaux (93 et 94) à un distributeur (95) ou analogue du tracteur. Leurs deuxièmes chambres (89 et 92) sont reliées entre elles par un tuyau (96). La deuxième chambre (89) du vérin (68) est en sus reliée au distributeur (95) par un tuyau (97). Ce vérin (68) comporte au niveau du branchement du tuyau (96) un clapet (98) du type anti-retour. Dans sa position normale, ce clapet (98) laisse passer l'huile en direction de la deuxième chambre (92) du vérin hydraulique (80) mais empêche son retour. Il est cependant actionné de sorte qu'il libère le passage de l'huile, en vue de permettre son retour vers le distributeur (95) via la deuxième chambre (89), par le piston (87) lorsqu'il arrive en fin de course.

Comme cela ressort de la figure 1, au travail, l'andaineur est déplacé dans la direction (A) à l'aide d'un tracteur. Les roues porteuses (9 et 10) roulent alors sur le sol. Le second rotor (3) est décalé latéralement par rapport au premier rotor (2). Ils sont disposés suivant une ligne oblique par rapport à la direction d'avancement (A) de sorte que leurs trajectoires se recouvrent partiellement. Le second rotor (3) est placé dans cette position au moyen du vérin hydraulique (68) qui oriente ses roues porteuses (9 et 10) et du dispositif de maintien (76). Les deux rotors (2 et 3) sont entraînés dans le même sens de rotation (F), autour de leurs axes supports (4 et 5), à partir de l'arbre de prise de force du tracteur. L'arbre d'entraînement (52) et le pignon (51) assurent alors l'entraînement du premier rotor (2). L'arbre de transmission (57) et les pignons (56 et 58) transmettent le mouvement du premier rotor (2) au second rotor (3). Par suite de cette rotation des rotors (2 et 3), les galets (18) situés aux extrémités des bras porte-fourches (14) se déplacent dans la came (17) qui est logée dans le carter (13) correspondant. Cette came (17) commande alors lesdits bras (14) de telle sorte que les fourches (15) soient dirigées vers le sol dans la partie avant de leur trajectoire et qu'elles pivotent vers le haut dans la partie latérale dans laquelle elles se déplacent vers l'arrière (vu dans la direction d'avancement (A)). Dans ladite partie avant, les fourches (15) ramassent le fourrage qui se trouve sur le sol. Ensuite elles le déposent sous la forme d'un andain en raison de leur pivotement dans la partie latérale de leur trajectoire. En raison de la disposition des deux rotors (2 et 3), l'andain formé par le rotor (2) le plus en avant est repris par l'autre rotor (3) qui forme un andain latéral de gros volume. Chacun des rotors (2 et 3) suit les dénivellations du sol indépendamment de l'autre grâce aux degrés de liberté que procurent l'axe d'articulation transversal (39) et l'axe de pivotement géométrique longitudinal (44) de la poutre de liaison (19).

Pour transposer l'andaineur dans la position de transport représentée sur la figure 2, l'opérateur actionne les vérins hydrauliques (12) qui soulèvent les rotors (2 et 3) du sol et le vérin hydraulique (30) qui lève la partie avant de la poutre de traction (24). De cette manière la garde au sol est suffisante pour pouvoir déplacer la machine sur les routes et les chemins. Ensuite, il actionne le vérin hydraulique (68) de sorte qu'il se raccourcisse et tourne le manchon (65), l'axe support (5) et les roues porteuses (9 et 10) de telle sorte que ces dernières s'orientent dans une direction parallèle à la poutre de liaison (19). Simultanément le vérin hydraulique (80) du dispositif de maintien (76) s'allonge et détend le ressort (77). Il suffit alors de déplacer la machine dans la direction (A) pour que le second rotor (3) et la poutre de liaison (19) pivotent autour de l'axe (4) sensiblement vertical du premier rotor (2) et se placent derrière celui-ci. La largeur de la machine est alors considérablement réduite. Dans cette position le verrou (71) est poussé par le ressort (73) dans le logement de blocage (70) du manchon (65). Il immobilise alors l'axe (5) et les roues (9 et 10) et évite de ce fait le retour par inadvertance du second rotor (3) dans la position de travail. Dans les parties courbes de la trajectoire suivie par la machine, le second rotor (3) suit le premier rotor (2) à la manière d'une remorque. L'allongement du vérin hydraulique (80) est tel que l'arrêt (86) qui est fixé sur sa tige (85) est éloigné de la bague (83) du ressort (77). Celui-ci peut alors glisser librement sur ladite tige (85) du vérin (80), ce qui permet à la poutre de liaison (19) et au second rotor (3) de se déplacer vers la droite ou vers la gauche autour de l'axe (4) du premier rotor (2). Lors de ces déplacements le pignon (56) de l'arbre de transmission (57) se déplace sur la denture (48) de la première couronne dentée (46). Cela évite de replier l'arbre de transmission (57) autour d'une articulation.

Pour revenir dans la position de travail, l'opérateur retire le verrou (71) de son logement (70) dans le manchon (65) au moyen du câble (75). Ensuite, il actionne le vérin hydraulique (68) pour qu'il s'allonge et fasse tourner ledit manchon (65), l'axe (5) et les roues (9 et 10) de telle sorte que la direction de ces dernières forme un angle avec la poutre de liaison (19). En même temps le vérin hydraulique (80) se rétracte et tend le ressort (77). Dès que l'opérateur avance avec la machine, le second rotor (3) tourne avec la poutre de liaison (19) autour de l'axe (4) du premier rotor (2) et se décale latéralement. Dans cette position, le vérin hydraulique (80) et le ressort (77) exercent une traction sur la poutre de liaison (19) et aident à la maintenir en position de travail. En dernier lieu, les vérins hydrauliques (12 et 30) sont actionnés de telle sorte que la machine s'abaisse jusqu'à ce que les fourches (15) touchent le sol. Les deux rotors (2 et 3) peuvent alors à nouveau être entraînés en rotation.

Dans l'exemple conforme à la figure 6, les vérins hydrauliques (68 et 80) sont commandés de la même manière que celle décrite précédemment pour transposer la machine de la position de transport dans la position de travail et vice versa. Toutefois, dans la position de travail, c'est-à-dire lorsque le vérin (68) est allongé et que le vérin (80) est rétracté, l'huile est bloquée dans la deuxième chambre (92) de ce dernier par le clapet (98). Il est alors possible de rentrer plus ou moins la tige du vérin (68) de sorte qu'elle modifie l'orientation du manchon (65), de l'axe (5) et des roues (9 et 10) du second rotor (3). Celui-ci se déplace alors plus ou moins vers l'arrière du premier rotor (2), ce qui permet de modifier la largeur de travail de la machine en fonction de la configuration du terrain et/ou du volume du fourrage à andainer. Le vérin (80) et le ressort (77) exercent constamment une traction sur la poutre de liaison (19) dans ces différentes positions de travail.

Enfin, lorsqu'on veut mettre la machine en position de transport, le vérin hydraulique (68) est commandé de telle sorte qu'il se rétracte totalement. Dès que son piston (87) arrive en fin de course, il ouvre le clapet (98) et libère l'huile qui bloquait le vérin hydraulique (80) et le ressort (77). Ce vérin (80) peut alors s'allonger comme cela a déjà été décrit, pour faciliter le transport de la machine.

Il est bien évident que l'invention n'est pas limitée au mode de réalisation décrit et représenté sur les dessins annexés. Des modifications sont possibles dans la limite du cadre défini par les revendications.

## Revendications

1. Machine de fenaison, notamment une andaineuse de végétaux coupés, comportant un bâti (1) portant deux rotors (2 et 3) d'andainage qui sont entraînés en rotation durant le travail autour d'axes (4 et 5) sensiblement verticaux munis de roues porteuses (9 et 10), lequel bâti (1) possède une poutre de traction (24) pouvant être reliée à un tracteur et portant le premier rotor (2) et une poutre de liaison (19) portant le deuxième rotor (3), cette poutre de liaison (19) étant articulée par rapport à la poutre de traction (24) et au premier rotor (2) de manière à pouvoir être déplacée avec le deuxième rotor (3) dans plusieurs positions, ***caractérisée par le fait* qu'**elle comporte un dispositif de maintien (76) qui aide à maintenir la poutre de liaison (19) et le second rotor (3) en position de travail et qui est disposé entre la poutre de traction (24) et ladite poutre de liaison (19).

2. Machine selon la revendication 1, ***caractérisée par le fait* que** le dispositif de maintien (76) se compose d'un ressort de traction (77) qui est accroché par l'une de ses extrémités à la poutre de liaison (19) et dont l'autre extrémité coopère avec un vérin hydraulique (80) qui est accroché à la poutre de traction (24).

3. Machine selon la revendication 2, ***caractérisée par le fait* que** le ressort de traction (77) est accroché à un axe (78) d'une patte (79) qui est solidaire de la partie (37) de la poutre de liaison (19), lequel axe (78) est placé dans un plan vertical passant par le milieu de la poutre de liaison (19) et dirigé dans la direction d'avancement (A) de la machine en position de transport.

4. Machine selon la revendication 2, ***caractérisée* par *le* fait que** le vérin hydraulique (80) est articulé au moyen d'un axe (81) sur un bras (82) de la poutre de traction (24), cet axe (81) se situant dans un plan vertical qui passe par le milieu de la poutre de traction (24) et qui est dirigé dans la direction d'avancement (A).

5. Machine selon la revendication 2, ***caractérisée par le fait* que** l'extrémité du ressort (77) qui coopère avec le vérin hydraulique (80) comporte une bague (83) avec un alésage (84) à travers lequel s'étend avec un léger jeu la tige (85) du vérin hydraulique (80), laquelle tige (85) porte un arrêt (86) à son extrémité située au-delà de la bague (83).

6. Machine selon l'une quelconque des revendications 1 à 5, ***caractérisée par le fait* qu'**elle comporte un vérin hydraulique (68) qui est articulé sur la poutre de liaison (19) et sur un manchon (65) qui est fixé sur l'axe (5) sensiblement vertical du deuxième rotor (3) et que le vérin hydraulique (80) du dispositif de maintien (76) est couplé à des tuyaux hydrauliques qui vont audit vérin hydraulique (68).

7. Machine selon l'une quelconque des revendications 1 à 5, ***caractérisée par le fait* qu'**elle comporte un vérin hydraulique (68) qui est articulé sur la poutre de liaison (19) et sur un manchon (65) qui est fixé sur l'axe (5) sensiblement vertical du deuxième rotor (3), que chaque vérin (68 et 80) comporte une première chambre (88 et 91) qui est reliée à un distributeur hydraulique (95) au moyen de tuyaux (93 et 94) et une deuxième chambre (89 et 92), lesquelles deuxièmes chambres (89 et 92) sont reliées entre elles au moyen d'un tuyau (96) et que la deuxième chambre (89) du vérin hydraulique (68) qui est articulé sur le manchon (65) du deuxième rotor (3) est également reliée au distributeur (95) au moyen d'un tuyau (97).

8. Machine selon la revendication 7, ***caractérisée par le fait* que** le vérin hydraulique (68) comporte au niveau du branchement du tuyau (96) qui relie les deuxièmes chambres (89 et 92) des vérins (68 et 80) un clapet (98) du type anti-retour.

9. Machine selon la revendication 8, ***caractérisée par le fait* que** le vérin hydraulique (68) comporte un piston (87) qui actionne le clapet (98).

## Patentansprüche

1. Heuwerbungsmaschine, insbesondere Schwader für Schnittgut, mit einem Gestell (1), das zwei Schwadrotoren (2 und 3) trägt, die im Betrieb um im wesentlichen vertikale Achsen (4 und 5), die mit Stützrädern (9 und 10) versehen sind, drehangetrieben werden, wobei das Gestell (1) einen Zugträger (24), der mit einem Traktor verbunden werden kann und den ersten Rotor (2) trägt, und einen den zweiten Rotor (3) tragende Verbindungsträger (19), aufweist, wobei dieser Verbindungsträger (19) derart bezüglich des Zugträgers (24) und des ersten Rotors (2) angelenkt ist, dass er mit dem zweiten Rotor (3) in mehrere Positionen verschoben werden kann, ***dadurch gekennzeichnet,* dass** sie eine Haltevorrichtung (76) aufweist, die dazu beiträgt den Verbindungsträger und den zweiten Rotor (3) in der Arbeitsstellung zu halten, und die zwischen dem Zugträger (24) und dem Verbindungsträger (19) angeordnet ist.

2. Maschine nach Anspruch 1, ***dadurch gekennzeichnet,* dass** die Haltevorrichtung (76) aus einer Zugfeder (77) besteht, die mit einem ihrer Enden an dem Verbindungsträger (19) angehängt ist und deren anderen Ende mit einem Hydraulikzylinder (80), der an dem Zugträger (24) angehängt ist, zusammenwirkt.

3. Maschine nach Anspruch 2, ***dadurch gekennzeichnet,* dass** die Zugfeder (77) an einer Achse (78) eines fest mit Teil (37) des Verbindungsträgers (19) verbundenen Ansatzes (79) angehängt ist, wobei die Achse (78) in eine durch die Mitte des Verbindungsträgers (19) verlaufenden, vertikalen Ebene, die in Transportstellung in Fahrtrichtung (A) der Maschine ausgerichtet ist, angeordnet ist.

4. Maschine nach Anspruch 2, ***dadurch gekennzeichnet,* dass** der Hydraulikzylinder (80) mittels einer Achse (81) an einem Arm (82) des Zugträgers (24) angelenkt ist, wobei diese Achse (81) in einer durch die Mitte des Zugträgers (24) verlaufenden, vertikalen Ebene, die in der Fahrbrichtung (A) ausgerichtet ist, angeordnet ist.

5. Maschine nach Anspruch 2, ***dadurch gekennzeichnet,* dass** das Ende der Feder (77), das mit dem Hydraulikzylinder (80) zusammenwirkt, einen Ring (83) mit einer Bohrung (84) aufweist, durch die sich die Stange (85) des Hydraulikzylinders (80) mit einem geringen Spiel erstreckt, wobei die Stange (85) an ihrem sich auf der anderen Seite des Rings (83) befindenden Ende ein Halteglied (86) aufweist.

6. Maschine nach irgend einem der Ansprüche 1 bis 5, ***dadurch gekennzeichnet,* dass** sie ein Hydraulikzylinder (68) aufweist, der an dem Verbindungsträger (19) und an einer an der im wesentlichen vertikalen Achse (5) des zweiten Rotors (3) befestigten Buchse (65) angelenkt ist, und dass der Hydraulikzylinder (80) der Haltevorrichtung (76) an Hydraulikrohre, die zum Hydraulikzylinder (68) verlaufen, gekoppelt ist.

7. Maschine nach irgend einem der Ansprüche 1 bis 5, ***dadurch gekennzeichnet,* dass** sie einen Hydraulikzylinder (68) aufweist, der an dem Verbindungsträger (19) und an einer an der im wesentlichen vertikalen Achse (5) des zweiten Rotors (3) befestigten Buchse (65) angelenkt ist, dass jeder Zylinder (68 und 80) eine erste Kammer (88 und 91), die mittels Rohren (93 und 94) mit einem Hydraulikverteiler (95) verbunden ist, und eine zweite Kammer (89 und 92) aufweist, wobei die zweiten Kammern (89 und 92) mittels eines Rohrs (96) untereinander verbunden sind, und dass die zweite Kammer (89) des an der Buchse (65) des zweiten Rotors (3) angelenkten Hydraulikzylinders (68) ebenfalls mittels eines Rohrs (97) mit dem Verteiler (95) verbunden ist.

8. Maschine nach Anspruch 7, ***dadurch gekennzeichnet,* dass** der Hydraulikzylinder (68) an der Abzweigung des Rohrs (96), das die zweiten Kammern (89 und 92) der Zylinder (68 und 80) miteinander verbindet, ein Rückschlagventil (98) aufweist.

9. Maschine nach Anspruch 8, ***dadurch gekennzeichnet,* dass** der Hydraulikzylinder (68) einen Kolben (87) aufweist, der das Ventil (98) betätigt.

## Claims

1. Haymaking machine, particularly a windrower of cut plants, including a frame (1) carrying two windrowing rotors (2 and 3) which are driven in rotation during work about approximately vertical axes (4 and 5) fitted with carrier wheels (9 and 10), which frame (1) has a draught beam (24) which can be connected to a tractor and carries the first rotor (2) and a connecting beam (19) carrying the second rotor (3), this connecting beam (19) being articulated with respect to the draught beam (24) and the first rotor (2) in such a way that it can be moved with the second rotor (3) into several positions, ***characterized in* that** it includes a securing device (76) which helps keeping the connecting beam (19) and the second rotor (3) in the work position and is arranged between the draught beam (24) and the said connecting beam (19).

2. Machine according to claim 1, ***characterized in* that** it the securing device (76) is composed of a tension spring (77) which is hooked via one of its ends onto the connecting beam (19), and the other end of which collaborates with a hydraulic ram (80) which is hooked to the draught beam (24).

3. Machine according to claim 2, ***characterized in* that** the tension spring (77) is hooked to an axis (78) on a lug (79) which is secured to the part (37) of the connecting beam (19), which axis (78) is placed in a vertical plane passing through the centre of the connecting beam (19) and facing in the direction of forward travel (A) of the machine in the transport position.

4. Machine according to claim 2, ***characterized in* that** the hydraulic ram (80) is articulated by means of an axis (81) to an arm (82) of the draught beam (24), this axis (81) lying in a vertical plane which passes through the centre of the draught beam (24) and which faces in the direction of forward travel (A).

5. Machine according to claim 2, ***characterized in* that** the end of the spring (77) which collaborates with the hydraulic ram (80) includes a ring (83) with a bore (84) through which the rod (85) of the hydraulic ram (80) extends with a small amount of clearance, which rod (85) carries a stop (86) at its end located beyond the ring (83).

6. Machine according to any one of claims 1 to 5, ***characterized in* that** it includes a hydraulic ram (68) which is articulated to the connecting beam (19) and to a sleeve (65) which is fixed to the approximately vertical axis (5) of the second rotor (3), and **in that** the hydraulic ram (80) of the securing device (76) is coupled to hydraulic pipes which run to the said hydraulic ram (68).

7. Machine according to any one of claims 1 to 5, ***characterized in* that** it includes a hydraulic ram (68) which is articulated to the connecting beam (19) and to a sleeve (65) which is fixed to the approximately vertical axis (5) of the second rotor (3), **in that** each ram (68 and 80) includes a first chamber (88 and 91) which is connected to a hydraulic distributor (95) by means of pipes (93 and 94) and a second chamber (89 and 92), which second chambers (89 and 92) are connected together by means of a pipe (96) and **in that** the second chamber (89) of the hydraulic ram (68) which is articulated to the sleeve (65) of the second rotor (3) is also connected to the distributor (95) by means of a pipe (97).

8. Machine according to claim 7, ***characterized in* that** the hydraulic ram (68) includes, at the connection of the pipe (96) which connects the second chambers (89 and 92) of the rams (68 and 80), a valve (98) of the non-return type.

9. Machine according to claim 8, ***characterized in* that** the hydraulic ram (68) includes a piston (87) which operates the valve (98).
